# FASCICULE DE BREVET EUROPEEN

(11) **EP 4 426 520 B1**
(45) Date de publication et mention de la délivrance du brevet: **19.08.2026**
(21) Numéro de dépôt: 22813537.2
(22) Date de dépôt: 04.11.2022
(51) Int. Cl.: B25J 15/04

(54) **DOIGT ET DISPOSITIF DE PRÉHENSION POUR BRAS DE ROBOT, BRAS DE ROBOT ÉQUIPÉ D' UN TEL DISPOSITIF**
FINGER UND GREIFVORRICHTUNG FÜR ROBOTERARM UND ROBOTERARM MIT EINER SOLCHEN VORRICHTUNG
FINGER AND GRIPPING DEVICE FOR ROBOT ARM, AND ROBOT ARM EQUIPPED WITH SUCH A DEVICE

(30) Priorité: 04.11.2021 FR 2111734
(43) Date de publication de la demande: 11.09.2024
(73) Titulaire: Finrip, 26120 Montélier (FR); Commissariat à l'Energie Atomique et aux Energies Alternatives, 75015 Paris (FR)
(72) Inventeur: CECCHIN, Michel, 26120 MONTELIER (FR); MILHAU, Pierre, 26300 CHATUZANGE-LE-GOUBET (FR); GROSSARD, Mathieu, 91191 GIF-SUR-YVETTE CEDEX (FR)
(74) Mandataire: Cabinet Boettcher
(86) Numéro de dépôt international: PCT/EP2022/080885
(87) Numéro de publication internationale: WO 2023/079122

(56) Documents cités:
- WO-A1-2020/094878
- CN-A- 110 640 776
- CN-A- 112 720 545
- CN-A- 112 873 248
- FR-A1- 3 032 645
- JP-A- 2019 181 585
- US-A- 5 108 140
- US-A- 5 280 981
- US-A- 5 863 086
- US-A1- 2018 272 541
- US-B2- 7 168 748

## Description

La présente invention concerne le domaine de la manutention et plus précisément de la manutention par des robots dont des cobots.

### ARRIERE PLAN DE L'INVENTION

Il est connu des bras de robot (ou bras robotisés) comprenant une base, un premier segment relié à la base par une première articulation, un deuxième segment relié au premier segment par une deuxième articulation, et un dispositif de préhension relié au deuxième segment par une troisième articulation couramment appelée poignet. Le dispositif de préhension peut comprendre des moyens électromagnétiques de saisie, des ventouses reliées à un dispositif d'aspiration ou des doigts articulés reliés à un moteur unique commandant l'actionnement simultané des doigts.

Généralement, le dispositif de préhension est réalisé sur mesure pour la tâche à accomplir et la forme des objets à saisir. Il en résulte un manque de flexibilité et des coûts non négligeables quand il s'agit d'adapter ledit dispositif de préhension aux objets à saisir.

Il existe également des « mains » robotisées à vocation universelle mais au prix d'une complexité et d'un coût importants. Documents US5108140A, CN112720545A, JP2019181585A, CN112873248A, montrent plusieurs exemples de doigts motorisés.

### OBJET DE L'INVENTION

L'invention a notamment pour but de fournir une solution au moins partielle aux problèmes ci-dessus.

### RESUME DE L'INVENTION

A cet effet, on prévoit, selon l'invention un doigt motorisé comprenant une embase de fixation à une platine de liaison à un bras robotisé, une première phalange reliée à l'embase par au moins une première articulation, une deuxième phalange reliée à la première phalange par au moins une deuxième articulation, un premier actionneur fixé à l'embase et relié au moins à la première phalange pour déplacer les phalanges entre deux positions extrêmes, l'embase comprenant une partie fixe et une partie mobile qui porte le premier actionneur et les phalanges et qui est reliée à la partie fixe par un palier définissant un axe d'orientation et autorisant une rotation de la partie mobile par rapport à la partie fixe autour dudit axe d'orientation, l'embase comprenant des moyens de sa fixation à la platine de telle manière que l'axe d'orientation soit sensiblement perpendiculaire à la platine, le doigt motorisé comprenant en outre une unité individuelle de commande, solidaire de l'embase, qui est reliée au premier actionneur pour le commander.

Il est dès lors possible de réaliser rapidement une main en assemblant un ou des doigts et une platine de liaison selon la disposition la plus adaptée à la tâche à réaliser et aux objets à saisir. Chaque doigt étant autonome quant à la motorisation des phalanges et la commande de cette motorisation, la synchronisation des doigts entre eux, lorsqu'il y en a plusieurs, peut être réalisée par commande des différents doigts et non par un dispositif de synchronisation mécanique de mouvement, ce qui simplifie la structure du dispositif de préhension ainsi réalisé. Par exemple, la synchronisation peut être réalisée via une unité générale de commande à laquelle les actionneurs et/ou les unités individuelles de commande sont reliés.

On comprend ici que la première phalange est reliée à la partie mobile de l'embase.

Optionnellement, l'unité individuelle de commande est solidaire de la partie fixe de l'embase.

Optionnellement, le premier actionneur est un actionneur électrique et/ou hydraulique et/ou pneumatique.

Optionnellement, le premier actionneur est un actionneur au moins en partie électrique (et par exemple électrique et pneumatique ou bien électrique et hydraulique) ou est un actionneur exclusivement électrique.

Optionnellement, l'unité individuelle de commande est au moins en partie une unité individuelle électronique de commande ou est exclusivement une unité individuelle électronique de commande. Optionnellement, l'unité générale de commande est au moins en partie une unité générale électronique de commande ou est exclusivement une unité générale électronique de commande.

Optionnellement le doigt motorisé comporte un deuxième actionneur agencé pour faire pivoter la partie mobile et régler l'orientation angulaire de la partie mobile par rapport à la partie fixe.

Optionnellement l'unité individuelle de commande, commandant le premier actionneur, est également configurée pour commander le deuxième actionneur.

Optionnellement, le deuxième actionneur est un actionneur électrique et/ou hydraulique et/ou pneumatique.

Optionnellement, le deuxième actionneur est un actionneur au moins en partie électrique (et par exemple électrique et pneumatique ou bien électrique et hydraulique) ou est un actionneur exclusivement électrique.

L'invention a également pour objet un dispositif de préhension comprenant une platine de liaison et au moins un doigt du type précité.

L'invention a également pour objet un bras de robot équipé d'un tel dispositif de préhension.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
La figure 1 est une vue schématique de côté d'un bras robotisé selon l'invention ;
La figure 2 est une vue schématique en perspective d'un dispositif de préhension selon un premier mode de réalisation ;
La figure 3 est une vue schématique en perspective d'un des doigts du dispositif ;
La figure 4 est une vue schématique de côté de ce doigt, montrant l'amplitude de mouvement possible ;
La figure 5 est une vue schématique de derrière de ce doigt ;
La figure 6 est une vue schématique de côté du dispositif montrant un mode de saisie en puissance d'un objet (adapté plutôt aux objets de relativement grande dimension) ;
La figure 7 est une vue schématique de côté du dispositif montrant un mode de saisie en finesse de l'objet (adapté plutôt aux objets de relativement petite dimension) ;
La figure 8 est une vue schématique en perspective d'un doigt selon une variante de réalisation ;
La figure 9 est une vue schématique en perspective d'un dispositif de préhension selon un deuxième mode de réalisation ;
La figure 10 est une vue analogue à la figure 9 d'une première variante du deuxième mode de réalisation ;
La figure 11 est une vue analogue à la figure 9 d'une deuxième variante du deuxième mode de réalisation ;
La figure 12 est une vue schématique en perspective d'un dispositif de préhension selon un troisième mode de réalisation ;
La figure 13 est une vue schématique illustrant de manière simplifiée le mécanisme d'un des doigts du dispositif ;
La figure 14 est une vue schématique en coupe de la partie supérieure d'un des doigts selon l'invention
La figure 15 est une vue analogue à la figure 6 d'un dispositif selon un quatrième mode de réalisation ;
La figure 16 est une vue schématique de dessus en coupe illustrant de manière simplifiée la prise d'un objet cylindrique par un dispositif selon l'invention ;
La figure 17 est une vue schématique de dessus en coupe illustrant de manière simplifiée la prise d'un objet sphérique par un dispositif selon l'invention ;
La figure 18 est une vue schématique de dessus en coupe illustrant de manière simplifiée la prise d'un objet parallélépipédique par un dispositif selon l'invention ;
La figure 19 est une vue schématique en perspective partielle d'un doigt selon une variante de réalisation de l'invention ;
La figure 20 est une vue schématique en perspective partielle d'un doigt selon une variante de réalisation de l'invention.

### DESCRIPTION DETAILLEE DE L'INVENTION

En référence aux figures, l'invention est ici décrite en application à un bras robotisé généralement désigné en **1.** Le bras robotisé 1 comprend une base 10, un premier segment 11 relié à la base 10 par une première articulation 21, un deuxième segment 12 relié au premier segment 11 par une deuxième articulation 22, et une interface 13 qui est reliée au deuxième segment 12 par une troisième articulation 23 et qui porte un dispositif de préhension généralement désigné en 50 formant l'extrémité libre du bras robotisé.

Le bras robotisé comprend ici des actionneurs, tels que des moteurs, pour déplacer l'un par rapport à l'autre les éléments reliés à une même articulation 21, 22, 23. Ces actionneurs ne sont pas ici représentés.

De manière connue en elle-même, chaque articulation 21, 22, 23 comprend un codeur, non représenté, agencé pour mesurer l'angle formé par les deux éléments reliés par ladite articulation 21, 22, 23.

Les moteurs et les codeurs sont reliés à une unité générale de commande. Dans le cas présent, l'unité générale de commande est une unité électronique générale de commande appelée par la suite unité électronique de commande 30. Ladite unité comprend au moins un processeur et une mémoire contenant un programme exécuté par ledit processeur pour commander les moteurs en fonction des instructions du programme, des mesures fournies par les codeurs et d'autres capteurs comme des capteurs de courant dans les moteurs permettant de déterminer un effort développé par chacun des moteurs. L'unité électronique de commande 30 est de préférence reliée à un émetteur/récepteur de signaux électromagnétiques, par exemple conforme au standard nommé BLUETOOTH.

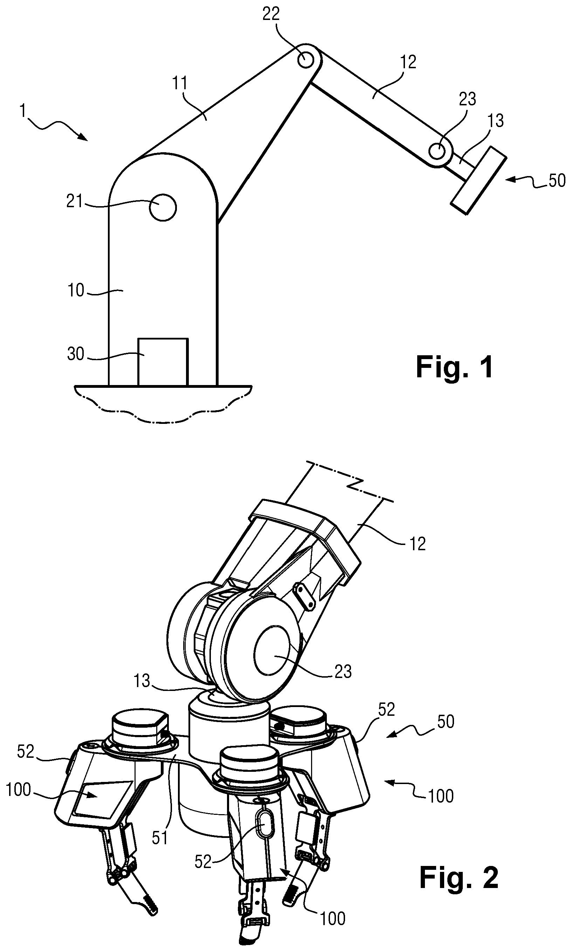

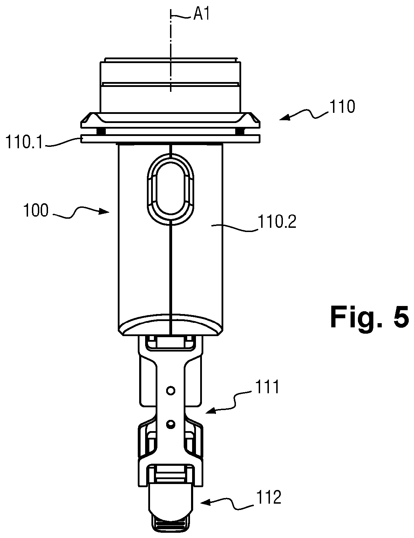

En référence aux figures 2 à 7, 13 et 14, et selon le premier mode de réalisation, le dispositif de préhension 50 comprend une platine 51 de liaison à l'interface 13 du bras robotisé 1. La platine 51 a la forme d'une plaque à trois branches s'étendant symétriquement par rapport à une portion centrale solidaire de l'interface 13.

Chaque branche de la platine 51 est pourvue d'un trou permettant la fixation d'un doigt généralement désigné en 100.

Chaque doigt 100 comprend une embase 110 de fixation à la platine 51, une première phalange 111 reliée à l'embase 110 par au moins une première articulation 121, une deuxième phalange 112 reliée à la première phalange 111 par au moins une deuxième articulation 122.

La première phalange 111 a la forme d'un quadrilatère déformable formé par un premier côté 111.1 opposé à l'embase 110, un deuxième côté 111.2 qui est opposé au premier côté 111.1 en regard de celui-ci et est relié par la première articulation 121 à l'embase 110, un troisième côté 111.3 qui est relié au deuxième côté 111.2 par la première articulation 121 et au premier côté 111.1 par la deuxième articulation 122, et un quatrième côté 111.4 relié par une troisième articulation 123 au deuxième côté 111.2 et par une quatrième articulation 124 au premier côté 111.1.

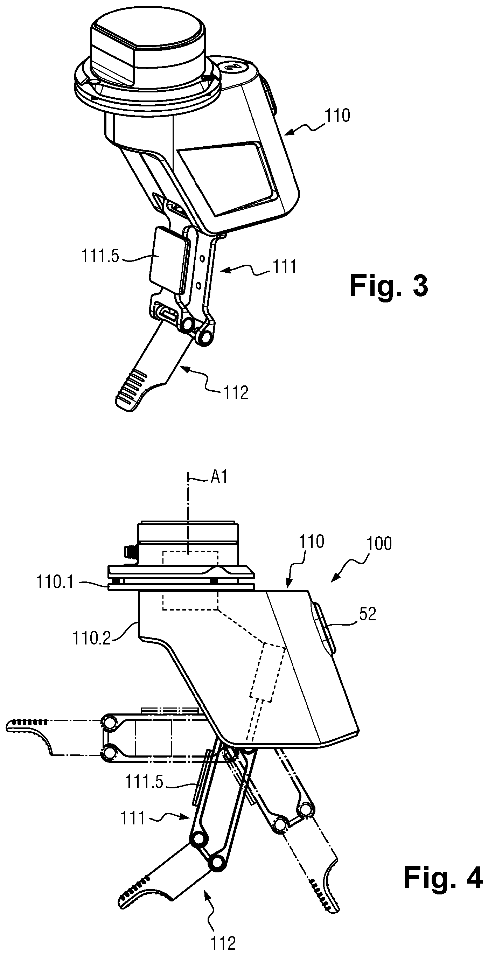

La deuxième phalange 112 est fixée sur le premier côté 111.1 dudit quadrilatère. La troisième articulation 123 est libre par rapport à l'embase 110 et peut donc se déplacer en arc de cercle autour de la première articulation 121. La deuxième articulation 122 est libre par rapport à l'embase 110 et peut se déplacer en arc de cercle autour de la première articulation 121. Le troisième côté 111.3, et donc la première phalange 111, peut donc pivoter par rapport à l'embase 110 entre deux positions extrêmes. Le premier côté 111.1 peut pivoter autour de la deuxième articulation 122 : la deuxième phalange 112 peut donc pivoter par rapport à la première phalange 111 entre deux positions extrêmes. Le déplacement de la quatrième articulation 124 est conditionné par les déplacements de la troisième articulation 123 et de la deuxième articulation 122 : l'amplitude de déplacement de l'extrémité distale de la deuxième phalange 112 (d'une position extrême à une autre - voir la figure 4) par rapport à l'embase 110 dépend donc de la combinaison du mouvement de la première phalange 111 par rapport à l'embase 110 et du mouvement de la deuxième phalange 112 par rapport à la première phalange 111.

La première phalange 111 comprend une interface de contact avec l'objet à saisir. L'interface de contact est ici un tampon d'appui 111.5 fixé sur le troisième côté 111.3. Le tampon d'appui 111.5 est par exemple en élastomère ou en silicone.

La deuxième phalange 112 a une portion d'extrémité distale 112.1 élastiquement déformable en flexion. La portion d'extrémité distale 112.1 est par exemple une lame métallique recouverte d'une couche souple par exemple en élastomère ou en silicone.

Le doigt 100 comprend un premier actionneur 101 qui est fixé à l'embase 110 pour déplacer la troisième articulation 123 en arc de cercle autour de la deuxième articulation 122. L'actionneur 101 est ici un actionneur électrique. Le premier actionneur 101 est ici un moteur rotatif à courant continu ayant un arbre de sortie entrainant un système vis/écrou (vis à billes de préférence). Le système vis/écrou est ici réversible de telle manière que l'on puisse déterminer la force exercée par le doigt 110 sur son environnement à partir d'une mesure du courant d'alimentation du moteur. L'ensemble formé de l'actionneur 101 et du système vis - écrou est ainsi un ensemble d'actionnement électromécanique et plus précisément électromécanique linéaire.

Si l'actionneur 101 pousse la troisième articulation 123 vers le troisième côté 111.3, on fait pivoter le troisième côté 111.3 autour de la deuxième articulation 122 jusqu'à ce que le troisième côté 111.3 rencontre un obstacle. Une fois le troisième côté 111.3 en butée, si le déplacement de la troisième articulation 123 se poursuit, on provoque le pivotement du premier côté 111.1 autour de la deuxième articulation 122 et donc le déplacement de la deuxième phalange 112. Le mouvement inverse permet de ramener la première phalange 111 et la deuxième phalange 112 en position initiale.

Selon les cas, l'actionneur 101 peut être piloté en position, en vitesse ou en effort. Dans le présent mode de réalisation, il est commandé en effort. De préférence, si la forme et la masse des objets à saisir est toujours identique, on surveillera le courant d'alimentation du moteur lors de la saisie afin de détecter une anomalie de fonctionnement ou une usure du dispositif de préhension et prévoir des opérations de maintenance préventive.

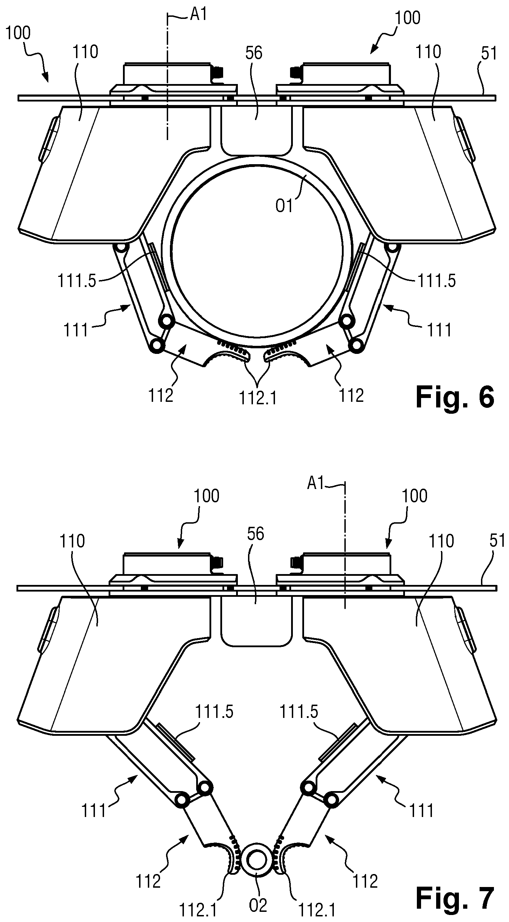

On peut voir sur la figure 6 la saisie en puissance d'un tube de relativement gros diamètre par deux doigts 100. On comprend que les actionneurs 101 sont pilotés pour refermer les doigts 100 sur le tube. Lors de la fermeture des deux doigts 100 sur le tube, les premières phalanges 111 ont pivoté vers le tube, les deuxièmes phalanges 112 restant dans le prolongement des premières phalanges 111, jusqu'à ce que les tampons d'appui 111.5 viennent au contact du tube bloquant le pivotement des premières phalanges 111. L'effort de l'actionneur 101 se poursuivant, les deuxièmes phalanges 112 pivotent par rapport aux premières phalanges jusqu'à venir en contact avec le tube. Lorsque le courant mesuré au niveau du moteur de l'actionneur augmente jusqu'à atteindre un seuil correspondant à l'effort de saisie requis. Les doigts 110 sont donc en contact avec le tube par les tampons d'appui 111.5 et par les deuxièmes phalanges 112. On notera que ce mouvement des phalanges permet de limiter le risque d'une éjection de l'objet lors de la saisie.

On peut voir sur la figure 7 la saisie en finesse d'un tube de relativement petit diamètre par les portions d'extrémité distale 112.1 de deux doigts. On comprend que les actionneurs 101 sont pilotés pour refermer les doigts 100 sur le tube. Lors de la fermeture des deux doigts 100 sur le tube, les premières phalanges 111 ont pivoté vers le tube, les deuxièmes phalanges 112 restant dans le prolongement des premières phalanges 111, jusqu'à ce que les portions d'extrémité distale 112.1 viennent au contact du tube bloquant le pivotement des premières phalanges 111. L'effort de l'actionneur 101 se poursuivant, les portions d'extrémité distale 112.1 sont fléchies sous l'effort de saisie et le courant mesuré au niveau du moteur de l'actionneur augmente jusqu'à atteindre un seuil correspondant à l'effort de saisie requis. Les doigts 110 sont donc en contact avec le tube uniquement par les portions d'extrémité distale 112.1 des deuxièmes phalanges 112. On remarquera que chaque portion d'extrémité distale 112.1 a une surface texturée pour améliorer la retenue de l'objet saisi entre les portions d'extrémité distale 112.1. Un seul actionneur permet donc de déplacer les deux phalanges. Un tel doigt est dit sous-actionné puisqu'il comporte moins d'actionneurs que d'articulations.

Par ailleurs, l'embase 110 comprend une partie fixe 110.1 et une partie mobile 110.2 qui porte le premier moteur et les phalanges 111, 112 et qui est reliée à la partie fixe 110.1 par un palier définissant un axe d'orientation A1 et autorisant une rotation de la partie mobile 110.2 par rapport à la partie fixe 110.1 autour dudit axe d'orientation A1. L'embase 110 comprend des moyens de sa fixation à la platine de liaison de telle manière que l'axe d'orientation A1 soit sensiblement perpendiculaire à la platine 51. Ces moyens de fixation peuvent comprendre des vis vissées dans la platine 51 en traversant des oreilles solidaires de la partie fixe 110.1, des boulons, des brides, des verrous, une liaison baïonnette...

Le doigt 100 comporte un deuxième actionneur 102 monté entre la partie fixe 110.1 et la partie mobile 110.2 de l'embase 110 pour faire pivoter la partie mobile 110.2 et régler l'orientation angulaire de la partie mobile 110.2 par rapport à la partie fixe 110.1. Le deuxième actionneur 102 est par exemple un actionneur électrique tel qu'un moteur électrique.

Les deux actionneurs 101, 102 sont ici reliés à une même unité individuelle de commande solidaire de l'embase 110 et par exemple de sa partie fixe 110.1. Dans le cas présent, l'unité individuelle de commande est une unité électronique individuelle de commande appelée par la suite unité électronique de commande 103. L'unité électronique de commande 103 comprend ici un circuit ASIC programmé pour assurer un pilotage des actionneurs 101, 102 en fonction de commandes reçues par un émetteur/récepteur de signaux électromagnétiques relié à l'unité électronique de commande 103. Ces commandes proviennent par exemple de l'unité électronique de commande 30.

L'embase 110 est pourvue d'un indicateur visuel d'état 52 (ici une diode électroluminescente) et l'unité électronique de commande 103 est reliée à l'indicateur 52 pour commander ledit indicateur 52 en fonction d'un état de fonctionnement de l'unité électronique de commande 103. De préférence, l'indicateur 52 peut être piloté pour s'allumer en plusieurs couleurs selon l'état de fonctionnement (par exemple vert pour un fonctionnement normal, jaune pour une phase d'initialisation et rouge pour une défaillance), de manière continue ou discontinue selon que l'unité électronique de commande 103 exécute une commande ou reçoit une commande, ou tout autre code réalisable. Dans le cas où l'unité électronique de commande 103 est programmée par apprentissage, on prévoira avantageusement que l'indicateur 52 puisse signaler à l'opérateur que l'unité de commande 103 est en mode d'apprentissage, par exemple par un clignotement.

Dans les environnements salissant, agressifs (agressions physicochimiques plus particulièrement), humides et/ou stériles, on prévoira avantageusement un doigtier étanche ayant une ouverture permettant son enfilement sur chaque doigt de manière à recouvrir chaque doigt. Le doigtier peut être en tout matériau souple adapté à l'utilisation envisagée et par exemple en silicone. La fixation du doigtier sur le doigt pourra être réalisée par exemple par pincement ou serrage, autour de l'embase du doigt, de la partie du doigtier bordant son ouverture. Le doigtier peut aussi ne recouvrir qu'une partie du doigt, par exemple la deuxième phalange ou les deux phalanges.

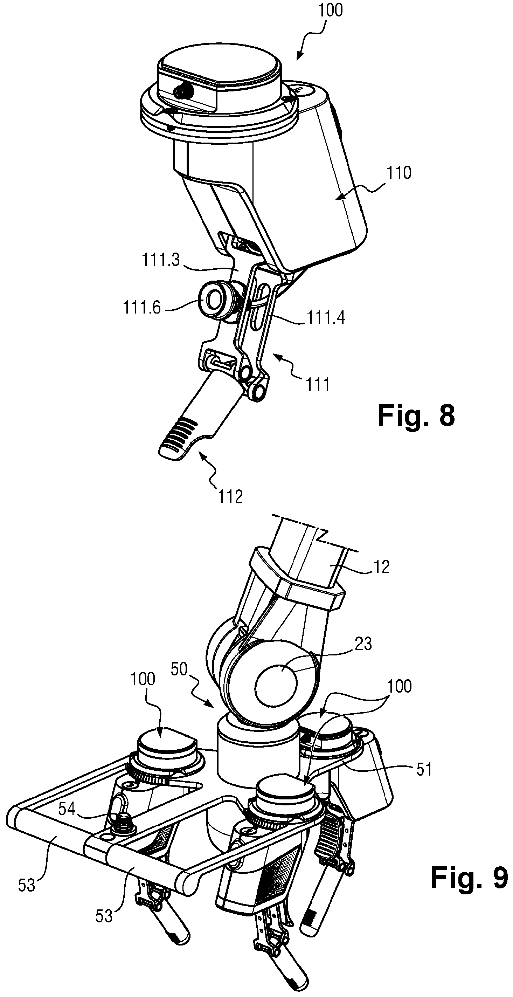

Dans la variante de réalisation de la figure 8, le tampon d'appui 111.5 est remplacé par une ventouse 111.6 raccordée par un réseau fluidique à un générateur de vide.

Selon le deuxième mode de réalisation représenté à la figure 9, la platine 51 a la forme d'une plaque comme précédemment mais est ici pourvue d'une poignée 53 saisissable par un opérateur pour diriger l'extrémité libre du bras robotisé 1 dans le cadre d'une tâche collaborative par exemple.

Des commandes peuvent être envoyées à l'unité électronique de commande 30 ou à l'unité électronique de commande 103 par au moins un bouton de commande 54 qui est monté sur la platine 51 à proximité de la poignée 53 et qui est pourvu d'un émetteur de signaux électromagnétiques en liaison avec l'émetteur/récepteur de l'unité électronique de commande 103 et/ou à celui de l'unité électronique de commande 30. Les unités électroniques de commande sont alors programmées pour réaliser une tâche collaborative.

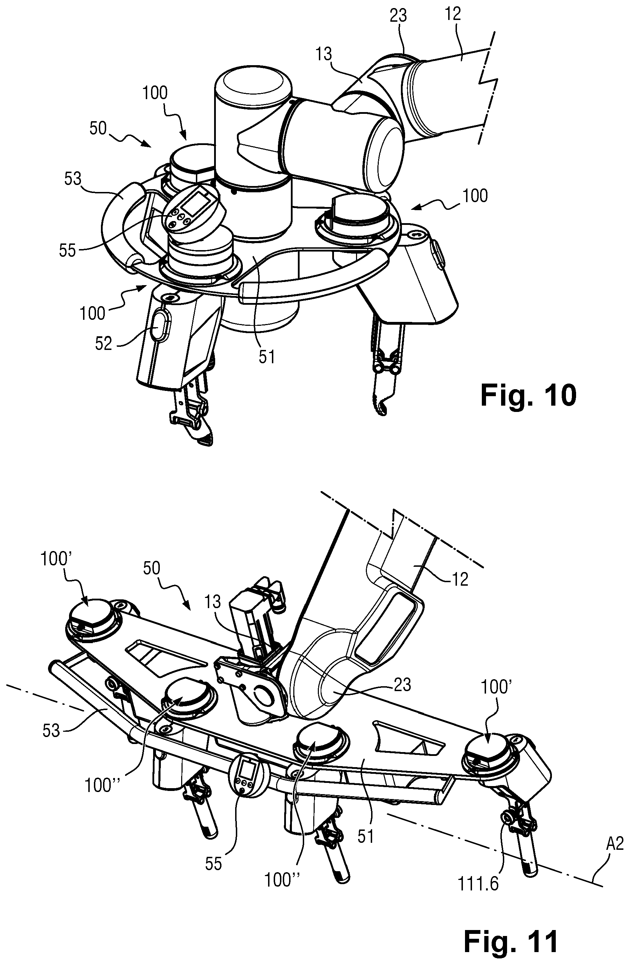

Dans une première variante du deuxième mode de réalisation, variante représentée sur la figure 11, le bouton 54 est remplacé par une interface de commande 55 comprenant un écran, un bouton de navigation dans un menu affiché sur l'écran, un bouton de sélection d'items dudit menu, et un ou plusieurs boutons commandant directement des actions des doigts 100 (par exemple un bouton pour saisir et un bouton pour lâcher). L'interface de commande comprend un émetteur/récepteur de signaux électromagnétiques en liaison avec l'émetteur/récepteur de l'unité électronique de commande 103 et/ou à celui de l'unité électronique de commande 30.

Comme représenté sur la figure 11 et selon une deuxième variante du deuxième mode de réalisation, la platine 51 a la forme d'une plaque allongée définissant un axe longitudinal A2 et portant deux doigts 100' à ces deux extrémités et deux doigts 100'' en sa partie médiane. Les deux doigts 100'' se situent d'un même côté de l'axe A2 en étant orientés vers l'axe A2 et les deux doigts 100' sont situés du côté de l'axe A2 opposé aux doigts 100'' en étant eux-aussi orientés vers l'axe A2. Il est dès lors possible de saisir un objet allongé entre les doigts 100' d'une part et les doigts 100'' d'autre part.

Comme dans la variante précédente, la platine 51 est pourvue d'une poignée 53 et d'une interface de commande 55.

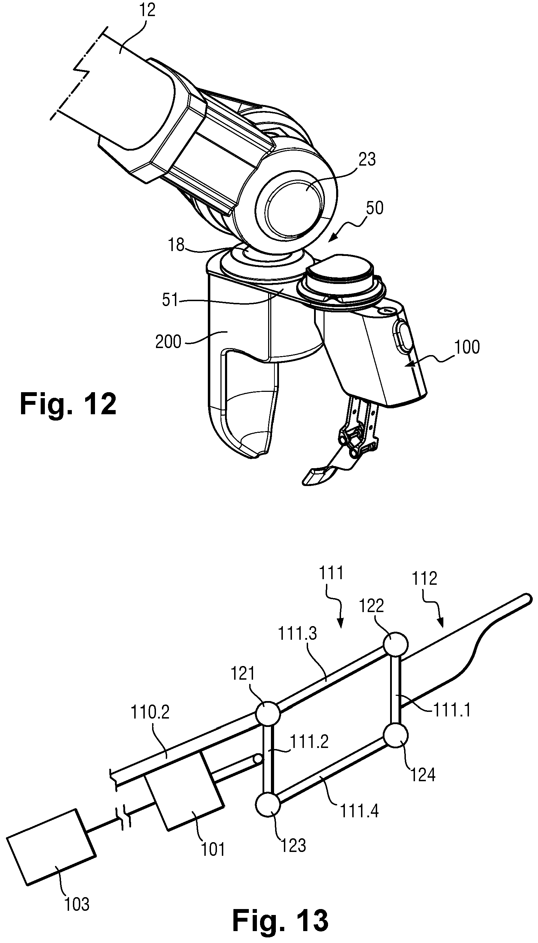

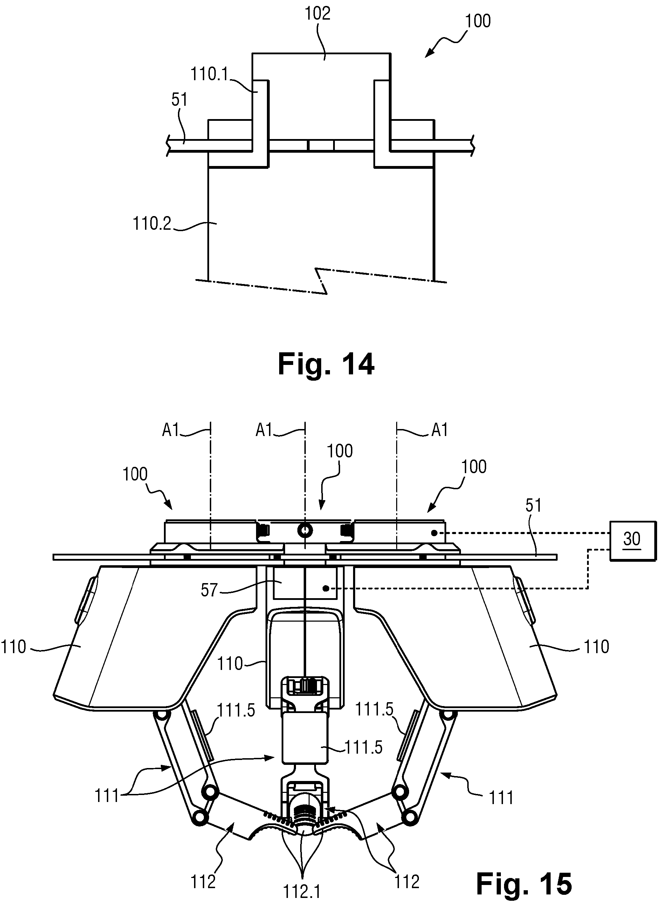

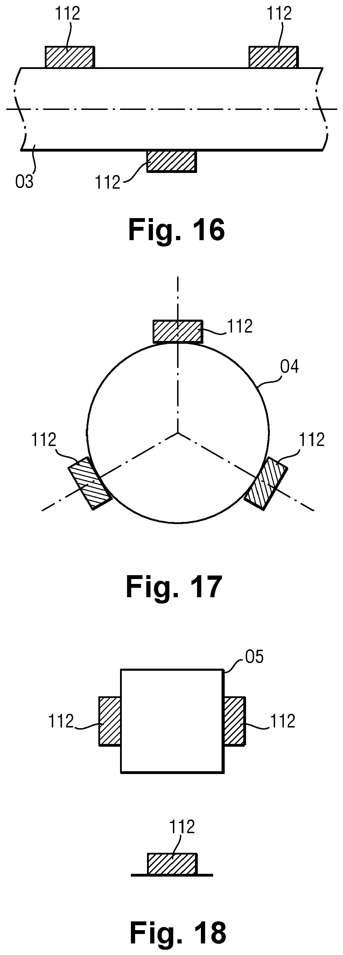

Selon le troisième mode de réalisation représenté sur la figure 12, le dispositif de préhension peut comprendre au moins un doigt 100 et un élément de contre-appui 200 s'étendant en regard du doigt 100. L'élément de contre-appui peut être un élément rigide ou élastiquement déformable mais suffisamment rigide pour pouvoir s'opposer au déplacement d'un objet qui serait appliqué contre l'élément de contre-appui 200 par le doigt 100 en question. L'élément de contre-appui 200 peut avoir une forme complémentaire de celle d'une partie de l'objet à saisir. Dans le mode de réalisation de la figure 15, le dispositif comprend une platine 51 pourvue de trois doigts 100 comportant chacun une embase à orientation motorisée. Une caméra 57 est montée sous la platine 51, entre les doigts 100, et est reliée à l'unité électronique de commande 30 pour déterminer la forme de l'objet à saisir et commander l'orientation des doigts 100 dans la configuration la plus adaptée à la saisie de l'objet. On peut par exemple commander les doigts pour réaliser une prise alternée pour un objet allongé ou cylindrique, comme sur la figure 16, une prise sphérique pour un objet en forme de boule, comme sur la figure 17, ou une prise avec des doigts opposés dans le cas d'un objet parallélépipédique, comme sur la figure 18. La programmation des configurations peut être réalisée par codage, ou par apprentissage via un opérateur qui oriente les doigts 100 dans la bonne orientation pour chaque type de pièce, ou le programme de commande de l'orientation des doigts peut faire intervenir un algorithme de classification (réseau de neurones) permettant au programme de déterminer en temps réel la configuration la mieux adaptée à la forme de l'objet à saisir les formes des objets à saisir et de déduire.

L'invention concerne ici également un kit de fabrication d'un dispositif de préhension, comprenant :
- des platines de formes différentes (celles représentées sur les figures),
- des doigts de types différents (à orientation fixe et à orientation réglable manuellement ou automatiquement),
- des phalanges distales de formes différentes (comme mentionné dans la présente description),
- des interfaces de formes différentes (comme celles représentées aux figures).

Le kit comprend également de préférence :
- des éléments de contre-appui de formes différentes (comme mentionné dans la présente description), et/ou
- des doigtiers pour recouvrir au moins la phalange distale des doigts, et/ou
- des capteurs de proximité (caméras, capteurs à ultrason), et/ou
- des capteurs de contact...

Il est de la sorte possible de fabriquer à la demande un dispositif de préhension adapté aux objets à saisir. Ceci est permis par la modularité du dispositif de préhension. Bien entendu, l'invention n'est pas limitée au mode de réalisation décrit mais englobe toute variante entrant dans le champ de l'invention telle que définie par les revendications.

En particulier, les doigts, la platine de liaison et le bras de robot peuvent avoir des structures différentes de celles décrites.

La platine peut avoir toute forme adaptée à la ou aux préhensions à réaliser et par exemple une forme à une ou plusieurs branches, une forme circulaire, elliptique, rectangulaire, triangulaire ou autre.

La platine peut également comprendre deux parties dont les positions relatives sont réglables, de manière motorisée ou non, afin d'adapter la configuration de la platine aux préhensions à réaliser.

Le nombre de phalanges, de segments, d'articulations peut être modifié pour l'adapter aux mouvements à réaliser. Les articulations peuvent être des pivots ou des rotules.

Le doigt peut comprendre au moins une phalange télescopique. Le bras peut comprendre au moins un segment télescopique.

Les pièces constituant chaque doigt, la platine de liaison et le bras peuvent être réalisées par tout procédé : découpage, emboutissage, forgeage, moulage, mécanosoudage, fabrication additive...

Les pièces constituant chaque doigt, la platine de liaison et le bras peuvent être en tout matériau dont les propriétés mécaniques sont compatibles avec l'utilisation envisagée et par exemple en métal (acier, aluminium, titane ou autre), en matériau thermoplastique (polyamide, polyaramide, polypropylène, polyéthylène, polyacrylobutadiène styrène, polycarbonate ou autre) éventuellement renforcé de fibre (verre, carbone, polyaramide ou autre), ou autre.

Tout type d'actionneur (que l'on considère le premier actionneur ou le deuxième actionneur) est utilisable : électrique et/ou pneumatique et/ou hydraulique. Tout type d'actionneur (que l'on considère le premier actionneur ou le deuxième actionneur) est utilisable : linéaire ou rotatif, avec ou sans réducteur, lié ou non à un organe de transmission de mouvement tel que par exemple un système vis/écrou de sorte que l'ensemble formé par l'actionneur et l'organe de transmission de mouvement soit linéaire ou rotatif Il est possible d'utiliser également des actionneurs à câble comme des vérins à câble.

Selon une variante à orientation motorisée, il est possible d'avoir un actionneur unique pour l'orientation de plusieurs doigts par rapport à la platine.

Selon une variante à orientation manuelle, l'embase peut comprendre une partie fixe de forme annulaire dans laquelle est reçu à pivotement une partie mobile orientable manuellement par rapport à la partie fixe. Il est par exemple prévu de pouvoir bloquer la rotation de la partie mobile par rapport à la partie fixe au moyen d'une vis pointeau engagée transversalement dans la partie fixe pour prendre appui sur la partie mobile, d'un verrou monté mobile transversalement sur la partie fixe entre une position escamotée et une position en saillie dans un logement d'une série de logements répartis angulairement sur un pourtour de la partie mobile, ou autre.

Avec les doigts orientables, il est possible d'orienter les doigts dos-à-dos pour saisir un objet par l'intérieur. L'embase peut être montée sur la platine pour être fixe en orientation.

Il est possible également d'avoir sur une même platine des doigts de types différents et par exemple, un doigt fixe en rotation selon l'axe A1, un doigt orientable manuellement selon l'axe A1 et un axe à orientation motorisée selon l'axe A1.

L'interface de contact de la première phalange peut avoir une structure différente de celles décrites ou au contraire être dépourvue d'interface de contact.

La portion d'extrémité distale de la deuxième phalange peut avoir toute forme adaptée à la préhension de l'objet à saisir et par exemple une forme en T, une forme incurvée ou autre. La portion d'extrémité distale peut comprendre une interface de contact comme la première phalange. De préférence, la portion d'extrémité distale est amovible pour pouvoir être facilement remplacée lorsque les objets à saisir ont des formes susceptibles de varier.

Des capteurs de contact peuvent être fixés sur les phalanges afin de pouvoir détecter un glissement de l'objet.

Des capteurs d'effort peuvent aussi être ajoutés par exemple si l'on utilise en sortie du moteur un système de transmission de mouvement non réversible. Ces capteurs d'effort sont par exemple des jauges de déformation fixées sur les phalanges ou des capteurs de couple disposés sur les articulations. L'utilisation de capteurs d'effort est avantageuse lorsque l'objet est fragile.

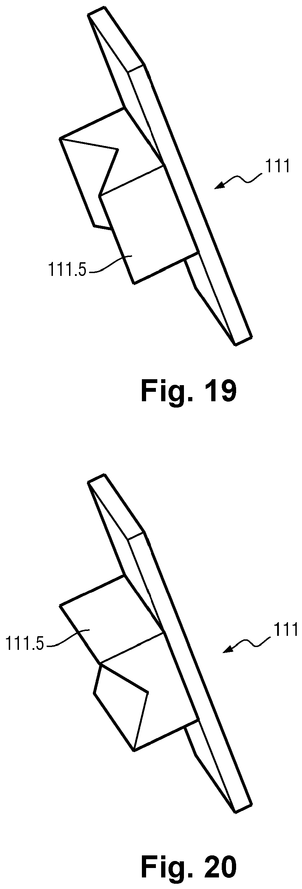

Le tampon d'appui peut avoir également des formes favorisant un blocage de la pièce comme par exemple une forme concave de centrage de la pièce (par exemple formant un vé de centrage comme représenté sur les figures 19 et 20, le vé de la figure 19 assurant un centrage dans un plan vertical, le vé de la figure 20 assurant un centrage dans un plan horizontal).

Au moins un capteur de position peut être monté sur les phalanges, sur le système de transmission de mouvement ou sur l'actionneur pour permettre un pilotage de l'actionneur en position.

Chaque doigt peut comprendre un frein électromagnétique pour éviter la chute de l'objet saisi en particulier lors de l'accomplissement d'une tâche collaborative.

Il est possible d'équiper le bras robotisé d'un capteur de présence d'un opérateur dans l'environnement du bras, par exemple un capteur à ultrasons ou une caméra. Ce capteur de proximité peut servir à la fois à détecter la pièce à prendre et sa forme pour définir la prise ou pour détecter l'irruption d'un humain dans l'espace de travail du doigt. Le dispositif de préhension peut comprendre une unité électronique de commande pilotant les doigts et en liaison avec l'unité de commande du bras robotisé.

L'unité individuelle de commande d'un des doigts peut être programmée pour former une unité de commande maître, les unités individuelles de commande des autres doigts étant programmées pour former des unités de commande esclaves ; ou les unités individuelles de commande de tous les doigts sont programmées pour former des unités de commande esclaves et l'unité générale de commande du robot ou du dispositif de préhension est programmée pour former une unité de commande maître.

Des liaisons filaires sont bien entendu utilisables à la place de tout ou partie des liaisons sans fil mentionnées.

L'unité individuelle de commande pourra être solidaire de la partie fixe et/ou mobile de l'embase.

Le doigt motorisé pourra comporter une même unité individuelle de commande commandant le premier actionneur et le deuxième actionneur dudit doigt ou pourra comporter deux unités individuelles différentes commandant chacun des deux actionneurs. Dans ce cas, au moins l'une des deux unités individuelles de commande pourra être solidaire de la partie fixe de l'embase et/ou mobile de l'embase. Au moins une des deux unités individuelles de commande pourra être au moins en partie une unité individuelle électronique de commande ou pourra être exclusivement une unité individuelle électronique de commande. Selon le type d'actionneur considéré, l'unité individuelle de commande pourra être exclusivement ou partiellement électronique. Par exemple l'unité individuelle de commande pourra être au moins en partie électrique et/ou hydraulique et/ou pneumatique.

L'invention est utilisable pour tout type de manutention : objets rigides (par exemple des pièces mécaniques) ou mous (par exemple des sachets contenant des liquides ou des poudres), produits naturels ou industriels, environnement et/ou produit transporté propre ou salissant...

## Revendications

1. Doigt motorisé (100), comprenant une embase (110) de fixation à une platine (51) de liaison à un bras robotisé (1), une première phalange (111) reliée à l'embase (110) par au moins une première articulation (121), une deuxième phalange (112) reliée à la première phalange (111) par au moins une deuxième articulation (122), un premier actionneur (101) fixé à l'embase (110) et relié au moins à la première phalange (111) pour déplacer les phalanges (111, 112) entre deux positions extrêmes, **caractérisé en ce que** l'embase (110) comprend une partie fixe (110.1) et une partie mobile (110.2) qui porte le premier actionneur (101) et les phalanges (111, 112) et qui est reliée à la partie fixe (110.1) par un palier définissant un axe d'orientation (A1) et autorisant une rotation de la partie mobile (110.2) par rapport à la partie fixe (110.1) autour dudit axe d'orientation (A1), **en ce que** l'embase (110) comprend des moyens de sa fixation à la platine (51) de telle manière que l'axe d'orientation (A1) soit sensiblement perpendiculaire à la platine (51), le doigt motorisé comprenant en outre une unité individuelle de commande (103), solidaire de l'embase, qui est reliée au premier actionneur pour le commander.

2. Doigt motorisé (100) selon la revendication 1, dans lequel le premier actionneur (101) est un actionneur électrique et/ou hydraulique et/ou pneumatique.

3. Doigt motorisé (100) selon l'une des revendications précédentes, dans lequel le premier actionneur (101) est un actionneur électrique et l'unité individuelle de commande (103) est une unité individuelle électronique de commande.

4. Doigt motorisé (100) selon l'une des revendications précédentes, dans lequel l'unité individuelle de commande (102) est solidaire de la partie fixe de l'embase.

5. Doigt motorisé (100) selon l'une des revendications précédentes, dans lequel l'embase (110) comporte un deuxième actionneur (102) agencé pour faire pivoter la partie mobile (110.2) et régler l'orientation angulaire de la partie mobile (110.2) par rapport à la partie fixe (110.1).

6. Doigt motorisé (100) selon la revendication 5, dans lequel l'unité individuelle de commande (103) est également configurée pour commander le deuxième actionneur.

7. Doigt motorisé (100) selon l'une quelconque des revendications précédentes, dans lequel la première phalange (111) a la forme d'un quadrilatère déformable et la deuxième phalange (112) est fixée sur un premier côté (111.1) dudit quadrilatère opposé à l'embase (110), le quadrilatère comportant, à l'opposé du premier côté (111.1), un deuxième côté (111.2) qui est relié par la première articulation (121) à l'embase (110) et à un troisième côté (111.3) et par une troisième articulation (123) à un quatrième côté (111.4) relié par une quatrième articulation (124) au premier côté (111.1), le premier actionneur (101) agissant de manière à déplacer la troisième articulation (123) par rapport à la deuxième articulation (122).

8. Doigt motorisé (100) selon l'une quelconque des revendications précédentes, dans lequel la première phalange (111) comprend une interface de contact avec l'objet à saisir.

9. Doigt motorisé (100) selon la revendication 8, dans lequel l'interface de contact est un tampon d'appui (111.5).

10. Doigt motorisé selon la revendication 8, dans lequel l'interface de contact est une ventouse (111.6) reliée à un générateur de vide.

11. Doigt motorisé selon l'une des revendications précédentes, dans lequel l'unité de commande (103) est agencée pour assurer un pilotage de l'actionneur (101) en retour d'effort.

12. Doigt motorisé selon l'une des revendications précédentes, dans lequel l'unité de commande (103) est reliée à un émetteur/récepteur de signaux électromagnétique au moins pour recevoir des commandes.

13. Doigt selon l'une des revendications précédentes, dans lequel le premier actionneur est réversible de telle manière que l'on puisse déterminer la force exercée par le doigt sur son environnement à partir d'une mesure du courant d'alimentation du premier actionneur.

14. Doigt motorisé l'une des revendications précédentes, dans lequel un indicateur visuel d'état (52) est porté par l'embase (110) et l'unité de commande (103) est reliée à l'indicateur pour commander ledit indicateur en fonction d'un état de fonctionnement de l'unité de commande.

15. Doigt motorisé selon l'une quelconque des revendications précédentes, dans lequel la deuxième phalange (112) a une portion d'extrémité distale (112.1) élastiquement déformable en flexion.

16. Dispositif de préhension, comprenant une platine (51) de liaison à un bras de robot (1), sur laquelle sont montés au moins un premier doigt (100) selon l'une quelconque des revendications précédentes ayant son embase reçue dans un trou de la platine, et au moins un élément de contre-appui s'étendant en regard du doigt.

17. Dispositif selon la revendication 16, dans lequel l'élément de contre-appui est un deuxième doigt (100) selon l'une quelconque des revendications 1 à 15.

18. Dispositif selon la revendication 16 ou 17, dans lequel chaque doigt comprend une unité individuelle de commande (103) en communication avec une unité de commande maître (30).

19. Dispositif selon la revendication 16 ou 17, dans lequel chaque doigt comprend une unité individuelle de commande (103) et l'une des unités individuelles de commande est programmée pour former une unité de commande maître, les autres unités individuelles de commande étant programmées pour former des unités de commande esclaves.

20. Dispositif selon la revendication 16 ou 17, comprenant une unité de commande générale en communication avec au moins un capteur de l'environnement externe du dispositif de préhension.

21. Bras robotisé (1) comprenant une base (10), un premier segment (11) relié à l'embase par une première articulation (21), un deuxième segment (12) relié au premier segment par une deuxième articulation (22), une interface (13) qui est reliée au deuxième segment par une troisième articulation (23), et un dispositif de préhension (50) selon l'une quelconque des revendications 16 à 20, l'interface (13) portant la platine (51) de liaison dudit dispositif de préhension (50).

22. Bras robotisé (1) selon la revendication 21, comprenant une unité de commande générale (30) programmée pour piloter le bras lors d'une tâche collaborative avec un opérateur, la platine de liaison comportant une poignée (53) saisissable par l'opérateur pour guider le robot.

23. Kit de fabrication d'un dispositif de préhension, comprenant des platines (51) de formes différentes, des doigts (100) selon l'une quelconque des revendications 1 à 15, des phalanges distales (112) de formes différentes, des interfaces de formes différentes.

24. Kit selon la revendication 23, comprenant des éléments de contre-appui (100, 200) de formes différentes.

25. Kit selon la revendication 23, comprenant des doigtiers pour recouvrir au moins la phalange distale des doigts.

## Patentansprüche

1. Motorisierter Finger (100), umfassend eine Basis (110) zur Befestigung an einer Platte (51) zur Verbindung mit einem Roboterarm (1), ein erstes Fingerglied (111), das über mindestens ein erstes Gelenk (121) mit der Basis (110) verbunden ist, ein zweites Fingerglied (112), das über mindestens ein zweites Gelenk (122) mit dem ersten Fingerglied (111) verbunden ist, einen ersten Stellantrieb (101), der an der Basis (110) befestigt und mindestens mit dem ersten Fingerglied (111) verbunden ist, um die Fingerglieder (111, 112) zwischen zwei Endpositionen zu bewegen, **dadurch gekennzeichnet, dass** die Basis (110) einen feststehenden Teil (110.1) und einen beweglichen Teil (110.2) umfasst, der den ersten Stellantrieb (101) und die Fingerglieder (111, 112) enthält und der mit dem feststehenden Teil (110.1) über ein Lager verbunden ist, das eine Ausrichtungsachse (A1) definiert und eine Drehung des beweglichen Teils (110.2) gegenüber dem feststehenden Teil (110.1) um die Ausrichtungsachse (A1) ermöglicht, dass die Basis (110) Mittel zu ihrer Befestigung an der Platte (51) umfasst, und zwar so, dass die Ausrichtungsachse (A1) im Wesentlichen senkrecht zur Platte (51) steht, wobei der motorisierte Finger ferner eine mit der Basis verbundene individuelle Steuereinheit (103) umfasst, die mit dem ersten Stellantrieb verbunden ist, um diesen zu steuern.

2. Motorisierter Finger (100) nach Anspruch 1, wobei der erste Stellantrieb (101) ein elektrischer und/oder hydraulischer und/oder pneumatischer Stellantrieb ist.

3. Motorisierter Finger (100) nach einem der vorstehenden Ansprüche, wobei der erste Stellantrieb (101) ein elektrischer Stellantrieb ist und die individuelle Steuereinheit (103) eine elektronische individuelle Steuereinheit ist.

4. Motorisierter Finger (100) nach einem der vorstehenden Ansprüche, wobei die individuelle Steuereinheit (102) fest mit dem feststehenden Teil der Basis verbunden ist.

5. Motorisierter Finger (100) nach einem der vorstehenden Ansprüche, wobei die Basis (110) einen zweiten Stellantrieb (102) umfasst, der so ausgelegt ist, dass er den beweglichen Teil (110.2) schwenkt und die Winkelausrichtung des beweglichen Teils (110.2) gegenüber dem feststehenden Teil (110.1) einstellt.

6. Motorisierter Finger (100) nach Anspruch 5, wobei die individuelle Steuereinheit (103) zusätzlich so ausgelegt ist, dass sie den zweiten Stellantrieb steuert.

7. Motorisierter Finger (100) nach einem der vorstehenden Ansprüche, wobei das erste Fingerglied (111) die Form eines verformbaren Vierecks aufweist und das zweite Fingerglied (112) an einer ersten Seite (111.1) des Vierecks befestigt ist, die der Basis (110) gegenüberliegt, wobei das Viereck gegenüber der ersten Seite (111.1) eine zweite Seite (111.2) umfasst, die über das erste Gelenk (121) mit der Basis (110) und einer dritten Seite (111.3) verbunden ist, sowie über ein drittes Gelenk (123) mit einer vierten Seite (111.4), die über ein viertes Gelenk (124) mit der ersten Seite (111.1) verbunden ist, wobei der erste Stellantrieb (101) so wirkt, dass er das dritte Gelenk (123) gegenüber dem zweiten Gelenk (122) verschiebt.

8. Motorisierter Finger (100) nach einem der vorstehenden Ansprüche, wobei das erste Fingerglied (111) eine Kontaktschnittstelle zu dem zu greifenden Objekt aufweist.

9. Motorisierter Finger (100) nach Anspruch 8, wobei die Kontaktschnittstelle ein Auflagepolster (111.5) ist.

10. Motorisierter Finger nach Anspruch 8, wobei die Kontaktschnittstelle ein mit einem Vakuumgenerator verbundener Saugnapf (111.6) ist.

11. Motorisierter Finger nach einem der vorstehenden Ansprüche, wobei die Steuereinheit (103) so ausgelegt ist, dass sie eine Steuerung des Stellantriebs (101) mit Kraftrückkopplung gewährleistet.

12. Motorisierter Finger nach einem der vorstehenden Ansprüche, wobei die Steuereinheit (103) mindestens zum Empfang von Befehlen mit einem Sender/Empfänger für elektromagnetische Signale verbunden ist.

13. Finger nach einem der vorstehenden Ansprüche, wobei der erste Stellantrieb so umkehrbar ist, dass die vom Finger auf seine Umgebung ausgeübte Kraft anhand einer Messung des Versorgungsstroms des ersten Stellantriebs bestimmt werden kann.

14. Motorisierter Finger nach einem der vorstehenden Ansprüche, wobei eine optische Zustandsanzeige (52) an der Basis (110) angebracht ist und die Steuereinheit (103) mit der Anzeige verbunden ist, um diese Anzeige in Abhängigkeit von einem Betriebszustand der Steuereinheit zu steuern.

15. Motorisierter Finger nach einem der vorstehenden Ansprüche, wobei das zweite Fingerglied (112) einen distalen Endabschnitt (112.1) aufweist, der bei Beugung elastisch verformbar ist.

16. Greifvorrichtung, umfassend eine Platte (51) zur Verbindung mit einem Roboterarm (1), an der mindestens ein erster Finger (100) nach einem der vorstehenden Ansprüche angebaut ist, dessen Basis in einer Bohrung der Platte untergebracht ist, sowie mindestens ein Gegenlagerelement, das sich gegenüber dem Finger erstreckt.

17. Vorrichtung nach Anspruch 16, wobei es sich bei dem Gegenlagerelement um einen zweiten Finger (100) nach einem der Ansprüche 1 bis 15 handelt.

18. Vorrichtung nach Anspruch 16 oder 17, wobei jeder Finger eine individuelle Steuereinheit (103) umfasst, die mit einer Master-Steuereinheit (30) in Verbindung steht.

19. Vorrichtung nach Anspruch 16 oder 17, wobei jeder Finger eine individuelle Steuereinheit (103) umfasst und eine der individuellen Steuereinheiten so programmiert ist, dass sie eine Master-Steuereinheit bildet, während die übrigen individuellen Steuereinheiten so programmiert sind, dass sie Slave-Steuereinheiten bilden.

20. Vorrichtung nach Anspruch 16 oder 17, umfassend eine allgemeine Steuereinheit, die mit mindestens einem Sensor im externen Umfeld der Greifvorrichtung in Verbindung steht.

21. Roboterarm (1) umfassend eine Basis (10), ein erstes Segment (11), das über ein erstes Gelenk (21) mit der Basis verbunden ist, ein zweites Segment (12), das über ein zweites Gelenk (22) mit dem ersten Segment verbunden ist, eine Schnittstelle (13), die über ein drittes Gelenk (23) mit dem zweiten Segment verbunden ist, und eine Greifvorrichtung (50) nach einem der Ansprüche 16 bis 20, wobei die Schnittstelle (13) die Verbindungsplatte (51) der Greifvorrichtung (50) enthält.

22. Roboterarm (1) nach Anspruch 21, umfassend eine allgemeine Steuereinheit (30), die so programmiert ist, dass sie den Arm bei einer kollaborativen Aufgabe mit einem Bediener steuert, wobei die Verbindungsplatte einen vom Bediener greifbaren Griff (53) zur Führung des Roboters aufweist.

23. Bausatz zur Herstellung einer Greifvorrichtung, umfassend Platten (51) unterschiedlicher Form, Finger (100) nach einem der Ansprüche 1 bis 15, distale Fingerglieder (112) unterschiedlicher Form sowie Schnittstellen unterschiedlicher Form.

24. Bausatz nach Anspruch 23, der Gegenlagerelemente (100, 200) unterschiedlicher Form umfasst.

25. Bausatz nach Anspruch 23, umfassend Fingerlinge, die mindestens das distale Fingerglied der Finger bedecken.

## Claims

1. Motorised finger (100), comprising a base (110) for fastening to a plate (51) for connecting to a robotic arm (1), a first phalanx (111) connected to the base (110) by at least one first articulation (121), a second phalanx (112) connected to the first phalanx (111) by at least one second articulation (122), a first actuator (101) fastened to the base (110) and connected at least to the first phalanx (111) to move the phalanxes (111, 112) between two end positions, **characterised in that** the base (110) comprises a fixed part (110.1) and a movable part (110.2) which carries the first actuator (101) and the phalanxes (111, 112) and which is connected to the fixed part (110.1) by a bearing defining an axis of orientation (A1) and enabling a rotation of the movable part (110.2) with respect to the fixed part (110.1) about said axis of orientation (A1), **in that** the base (110) comprises means for its fastening to the plate (51), such that the axis of orientation (A1) is substantially perpendicular to the plate (51), the motorised finger further comprising an individual control unit (103), secured to the base, which is connected to the first actuator to control it.

2. Motorised finger (100) according to claim 1, wherein the first actuator (101) is an electric and/or hydraulic and/or pneumatic actuator.

3. Motorised finger (100) according to one of the preceding claims, wherein the first actuator (101) is an electric actuator and the individual control unit (103) is an individual electronic control unit.

4. Motorised finger (100) according to one of the preceding claims, wherein the individual control unit (102) is secured to the fixed part of the base.

5. Motorised finger (100) according to one of the preceding claims, wherein the base (110) comprises a second actuator (102) arranged to make the movable part (110.2) pivot and adjust the angular orientation of the movable part (110.2) with respect to the fixed part (110.1).

6. Motorised finger (100) according to claim 5, wherein the individual control unit (103) is also configured to control the second actuator.

7. Motorised finger (100) according to any one of the preceding claims, wherein the first phalanx (111) has the shape of a deformable quadrilateral and the second phalanx (112) is fastened onto a first side (111.1) of said quadrilateral opposite the base (110), the quadrilateral comprising, opposite the first side (111.1), a second side (111.2) which is connected by the first articulation (121) to the base (110) and to a third side (111.3) and by a third articulation (123) to a fourth side (111.4) connected by a fourth articulation (124) to the first side (111.1), the first actuator (101) acting so as to move the third articulation (123) with respect to the second articulation (122).

8. Motorised finger (100) according to any one of the preceding claims, wherein the first phalanx (111) comprises a contact interface with the object to be gripped.

9. Motorised finger (100) according to claim 8, wherein the contact interface is a support buffer (111.5).

10. Motorised finger according to claim 8, wherein the contact interface is a suction cup (111.6) connected to a vacuum generator.

11. Motorised finger according to one of the preceding claims, wherein the control unit (103) is arranged to ensure a controlling of the actuator (101) in force return.

12. Motorised finger according to one of the preceding claims, wherein the control unit (103) is connected to an electromagnetic signal emitter/receiver at least to receive commands.

13. Finger according to one of the preceding claims, wherein the first actuator is reversible such that the force exerted by the finger on its environment can be determined from a measurement of the supply current of the first actuator.

14. Motorised finger according to one of the preceding claims, wherein a visual status indicator (52) is carried by the base (110) and the control unit (103) is connected to the indicator to control said indicator according to an operating status of the control unit.

15. Motorised finger according to any one of the preceding claims, wherein the second phalanx (112) has a distal end portion (112.1) elastically deformable when bending.

16. Gripping device, comprising a plate (51) for connecting to a robot arm (1), on which are mounted at least one first finger (100) according to any one of the preceding claims, having its base received in a hole of the plate, and at least one abutment element extending facing the finger.

17. Device according to claim 16, wherein the abutment element is a second finger (100) according to any one of claims 1 to 15.

18. Device according to claim 16 or 17, wherein each finger comprises an individual control unit (103) in communication with a master control unit (30).

19. Device according to claim 16 or 17, wherein each finger comprises an individual control unit (103) and one of the individual control units is programmed to form a master control unit, the other individual control units being programmed to form slave control units.

20. Device according to claim 16 or 17, comprising a general control unit in communication with at least one sensor of the external environment of the gripping device.

21. Robotic arm (1) comprising a base (10), a first segment (11) connected to the base by a first articulation (21), a second segment (12) connected to the first segment by a second articulation (22), an interface (13) which is connected to the second segment by a third articulation (23), a gripping device (50) according to any one of claims 16 to 20, the interface (13) carrying the platine (51) of said gripping device (50)

22. Robotic arm (1) according to claim 21, comprising a general control unit (30) programmed to control the arm during a collaborative task with an operator, the connecting plate comprising a handle (53) which can be gripped by the operator to guide the robot.

23. Kit for manufacturing a gripping device, comprising plates (51) of different shapes, fingers (100) according to any one of claims 1 to 15, distal phalanxes (112) of different shapes, interfaces of different shapes.

24. Kit according to claim 23, comprising abutment elements (100, 200) of different shapes.

25. Kit according to claim 23, comprising fingerstalls to cover at least the distal phalanx of the fingers.
